# EUROPÄISCHE PATENTSCHRIFT

(11) **EP 3 571 145 B1**
(45) Veröffentlichungstag und Bekanntmachung des Hinweises auf die Patenterteilung: **06.09.2023**
(21) Anmeldenummer: 18743397.4
(22) Anmeldetag: 20.06.2018
(51) Int. Cl.: B65G 21/20, B65G 23/14

(54) **ANTRIEBSVORRICHTUNG, ANTRIEBSELEMENT UND FÖRDERWAGENANTRIEB**
DRIVE DEVICE, DRIVE ELEMENT, AND CONVEYOR WAGON DRIVE
ARRANGEMENT D'ENTRAÎNEMENT, ÉLÉMENT D'ENTRAÎNEMENT ET MÉCANISME D'ENTRAÎNEMENT POUR CHARIOT DE TRANSPORT

(30) Priorität: 30.06.2017 DE 102017006212
(43) Veröffentlichungstag der Anmeldung: 27.11.2019
(73) Patentinhaber: Interroll Holding AG, 6592 Sant' Antonino (CH)
(72) Erfinder: EISINGER, Thomas, 74889 Sinsheim (DE); DROSTE, Heinrich, 74889 Sinsheim (DE)
(74) Vertreter: Kohlhof, Stephan
(86) Internationale Anmeldenummer: PCT/EP2018/066420
(87) Internationale Veröffentlichungsnummer: WO 2019/002048

(56) Entgegenhaltungen:
- EP-A1- 1 034 924
- EP-A2- 0 629 566
- EP-A2- 1 375 390

## Beschreibung

Die Erfindung betrifft einen Förderwagenantrieb für einen Förderwagen einer Fördereinrichtung zur Förderung von Fördergut.

Bei einem herkömmlichen Förderwagenantrieb mit einer Antriebsvorrichtung für einen Förderwagen einer Fördereinrichtung wird der Förderwagen üblicherweise mittels einer bekannten Gummiblockkette gezogen. Solche Förderwagen werden mit einem quer zur Förderrichtung angeordneten und antreibbaren Fördergurt ausgestattet und bevorzugt als umlaufende Wagenketten in Quergurt-Sortern (Crossbelt-Sortern bzw. Quergurtförderern) eingesetzt, um Stückgüter zur Hochleistungsverteilung in Post- und Distributionszentren aufzunehmen und zu befördern. Dabei weist die bekannte Gummiblockkette auf ihrer Antriebsseite quer zur Antriebsrichtung ausgebildete Zahnlücken auf, in die entsprechende Zähne eines - mittels eines Elektromotors angetriebenen - Antriebszahnrads oder einer Antriebszahnkette eingreifen. Auf ihrer Andruckseite weist der Antrieb mehrere Riemen auf, die zwei Umlenkrollen und eine Andruckeinheit umschlingen. Zum Sicherstellen des Formschlusses aus Zahn und Zahnlücke drückt die Andruckeinheit über die mehreren Riemen in Richtung der Antriebsseite auf die Gummiblockkette. Insbesondere zum Ermöglichen von Kurvenfahrten ist die Gummiblockkette andruckseitig abwechselnd quer zur Antriebsrichtung mit Stegen und Lücken ausgebildet.

Die EP 1 375 390 A2 offenbart eine Vorrichtung zur Förderung von Stückgütern, die eine Sortiereinrichtung zum Sortieren der Stückgüter enthält, bei der Längs einer Förderstrecke aufeinanderfolgende Fördereinrichtungen geführt und mittels wenigstens eines an einem Antriebsband angreifenden Antriebsmittels antreibbar ist.

Ein antriebsseitiges Antriebsband und ein abtriebsseitiges Antriebsband umfassen jeweils eine ein Zahnprofil aufweisende Gummikette, wobei die Zahnprofile beider Gummiketten im wesentlich gleich gestaltet sind. Das Antriebsband ist zwischen Klemmbacken von sich wenigstens im Wesentlichen über die gesamte Länge der jeweiligen Fördereinrichtung bzw. Sortiereinrichtung erstreckenden, starren Klemmprofilen festgeklemmt und die nicht eingeklemmte Länge des Antriebsbandes ist zwischen aufeinanderfolgenden Fördereinrichtungen sehr viel kleiner als die Länge der Klemmprofile. Im Rahmen des Prüfungsverfahrens ist die Erteilungsbehörde davon ausgegangen, dass EP 1 375 390 A2 die Merkmale der Präambel von Anspruch 1 offenbart.

Die EP 0 629 566 A2 offenbart einen Plattenförderer, bei dem die Vergrößerung der Teilung einer Kette wegen Verschleiß leicht eingestellt werden kann, ohne die üblicherweise an dem Rahmen erforderlichen Arbeiten auszuführen. In dem Plattenförderer tragen Lamellenstützelemente in einer Bewegungsrichtung nebeneinanderliegende Lamellen; jedes der Lamellenstützelemente ist mit einem ersten Verbindungsabschnitt und einem zweiten Verbindungsabschnitt zum Verbinden der benachbarten Lamellenstützelemente versehen; der zweite Verbindungsabschnitt eines nachfolgenden Lamellenstützelements überlappt mit dem ersten Verbindungsabschnitt eines vorhergehenden Lamellenstützelements; Kupplungswellen sind vorgesehen, von denen jede mit einem ersten Wellenabschnitt versehen ist, der mit dem ersten Verbindungsabschnitt in Eingriff steht, und einem zweiten Wellenabschnitt, der mit dem zweiten Verbindungsabschnitt in Eingriff steht; der erste Wellenabschnitt und der zweite Wellenabschnitt sind auf zwei Achsen parallel zueinander exzentrisch ausgebildet und die Kupplungswelle dient dazu, den Abstand zwischen den benachbarten Lamellen durch freie Drehung ihrer Befestigungsposition einzustellen und verbindet die Lamellenstützelemente endlos in der Kette.

Die EP 1 034 924 A1 offenbart eine Vorrichtung zur Handhabung von Produkten, insbesondere von Druckprodukten im Falzapparat einer Rollenrotations-Druckmaschine, die einen Zahnriemen mit einer Vielzahl von Zähnen und mindestens ein Produkthandhabungselement umfasst, wobei das Produkthandhabungselement an dem Zahnriemen befestigt ist.

Solche bekannten Lösungen sind meist schwer, wartungsintensiv, laut und teuer in der Herstellung. Diese Nachteile sind überwiegend der zuvor beschriebenen Antriebsart geschuldet und resultieren beispielsweise bei dem Antriebszahnrad oder der Antriebszahnkette aus deren relativ hohem Gewicht, der Notwendigkeit zum regelmäßigen Schmieren und/oder einem lauten Abrollgeräusch derselben. Zu den hohen Kosten trägt insbesondere die sich aus der Antriebsart ergebende Vielzahl der unterschiedlichen Teile bei.

Zur Vermeidung dieser Nachteile ist es eine Aufgabe der Erfindung, eine verbesserte Antriebsvorrichtung für einen Förderwagen einer Fördereinrichtung zur Verfügung zu stellen, bei der insbesondere der Wartungsaufwand, die Kosten und die Geräuschentwicklung verringert sind.

Die Aufgabe wird durch den Gegenstand des unabhängigen Patentanspruchs gelöst.

Vorteilhafte Ausführungsbeispiele der Erfindung sind Gegenstand der weiteren Unteransprüche.

Ein Aspekt betrifft einen Förderwagenantrieb für einen Förderwagen einer Fördereinrichtung, mit einer Antriebsquelle und einer Antriebskraftübertragungseinrichtung zum Übertragen einer Antriebskraft der Antriebsquelle auf ein Antriebselement, wobei der Förderwagen zum Antreiben mittels der Antriebsvorrichtung an dem Antriebselement befestigbar ist. Die Antriebskraft ist von der Antriebskraftübertragungseinrichtung mittels kraftschlüssiger oder reibschlüssiger Verbindung auf das Antriebselement übertragbar.

Ein Vorteil des Aspekts ist, dass wegen der kraft- oder reibschlüssigen Kraftübertragung auf ein Antriebszahnrad oder eine Antriebszahnkette mit den zuvor beschriebenen negativen Eigenschaften verzichtet werden kann und insbesondere der Wartungsaufwand wegen des damit verbundenen Entfallens der regelmäßigen Schmierung derselben verringert ist. Ferner ergibt sich die angestrebte Geräusch- und Kostenreduktion.

Ein weiterer Vorteil des Aspekts ist, dass die reibschlüssige Antriebsvorrichtung kleiner, insbesondere quer zur Förderrichtung schmäler, ausgeführt werden kann als eine herkömmliche formschlüssige Antriebsvorrichtung.

Die Antriebsvorrichtung für den Förderwagen der Fördereinrichtung kann eine Vorrichtung zum Antreiben des Förderwagens der Fördereinrichtung sein, mittels der der Förderwagen in der Fördereinrichtung fortbewegbar ist, um beispielsweise ein Fördergut auf dem Förderwagen von einem Startort zu einem Zielort zu transportieren.

Der Förderwagen der Fördereinrichtung kann zum Transportieren des Förderguts eine im Wesentlichen senkrecht zu einer Schwerkraftrichtung ausgebildete Förderebene aufweisen, auf der das Fördergut aufgrund der auf das Fördergut wirkenden Schwerkraft abstellbar und somit mittels des Förderwagens transportierbar ist. Der Förderwagen kann einen Quergurtförderer zum Fördern von Fördergut in einer Richtung quer zu der Förderrichtung der Fördereinrichtung aufweisen.

Die Fördereinrichtung kann zum Transportieren von Fördergut in eine Förderrichtung einen oder mehrere Förderwägen und eine oder mehrere Antriebsvorrichtungen für den oder die Förderwägen aufweisen.

Als Antriebsquelle der Antriebsvorrichtung kann beispielsweise eine elektrische, hydraulische oder elektrohydraulische Antriebsquelle zum Einsatz kommen.

Die Antriebskraftübertragungseinrichtung zum Übertragen der Antriebskraft der Antriebsquelle auf das Antriebselement ist eine geeignete Einrichtung mit einer zum Übertragen der Antriebskraft der Antriebsquelle auf das Antriebselement mittels kraftschlüssiger oder reibschlüssiger Verbindung ausreichenden Reibfläche.

Die Antriebskraftübertragungseinrichtung ist ein Riementrieb.

Das Antriebselement ist ein für kraftschlüssige oder reibschlüssige Kraftübertragung geeignetes Element, wobei das Antriebselement insbesondere eine zum Ziehen eines oder mehrerer Förderwägen ausreichende Stabilität aufweist. Das Antriebselement kann beispielsweise eine an diese Anforderungen angepasste Gummiblockkette sein.

Eine kraftschlüssige oder reibschlüssige Verbindung setzt eine Normalkraft auf die kraftschlüssig oder reibschlüssig verbundenen Flächen voraus. Bei ausreichender Normalkraft und/oder ausreichendem Reibbeiwert für Haftreibung der kraftschlüssig oder reibschlüssig verbundenen Flächen ist eine Relativbewegung der Flächen verhindert.

Andere Verbindungsarten sind formschlüssige oder stoffschlüssige Verbindung. Die formschlüssige Verbindung entsteht durch ein Ineinandergreifen von mindestens zwei Verbindungselementen. Grundsätzlich bleibt die formschlüssige Verbindung auch bei unterbrochener Kraftübertragung bestehen. Die stoffschlüssige Verbindung entsteht durch Zusammenhalten der Verbindungselemente durch atomare oder molekulare Kräfte. Sie ist grundsätzlich eine nicht lösbare Verbindung, die sich beispielsweise durch Zerstörung der Verbindungsmittel trennen lässt.

Erfindungsgemäß ist die Antriebskraftübertragungseinrichtung ein Riementrieb, der einen zwischen einem Antriebsriemen und einem Andruckriemen ausgebildeten Spalt aufweist, in dem das Antriebselement zum Antreiben klemmbar ist oder an den Antriebsriemen anpressbar ist. Somit kann eine Normalkraft zum Herstellen bzw. Sicherstellen der kraft- oder reibschlüssigen Verbindung zwischen Antriebsriemen und Antriebselement aufgebracht werden.

Insbesondere können der Antriebsriemen und/oder der Andruckriemen zusammen mit dem Antriebselement einen hohen Reibbeiwert für Haftreibung aufweisen. Beispielsweise beträgt der Reibbeiwert für Haftreibung zwischen dem Antriebsriemen und dem Antriebselement und/oder zwischen dem Andruckriemen und dem Antriebselement etwa zwischen 0,4 und 0,6 oder zwischen etwa 0,3 und 0,7.

Insbesondere kann der Reibbeiwert für Haftreibung zwischen dem Antriebsriemen und dem Antriebselement und/oder zwischen dem Andruckriemen und dem Antriebselement etwa 0,9 betragen, was zum Beispiel mittels einer auf den Antriebsriemen und den Andruckriemen aufgebrachten, insbesondere aufvulkanisierten oder aufgeklebten, Beschichtung erreicht werden kann. Vorzugsweise kann die Beschichtung eine Härte von etwa 55° bis 70° Shore-A aufweisen.

Vorteilhafterweise weist die Antriebskraftübertragungseinrichtung eine Antriebsseite und eine Andruckseite auf. Die Antriebsseite enthält vorteilhafterweise eine Antriebsrolle, eine Umlenkrolle, den die Antriebsrolle und die Umlenkrolle umschlingenden Antriebsriemen und eine Gegendruckeinrichtung mit Gegendruckrollen. Die Andruckseite enthält vorteilhafterweise zwei Umlenkrollen, den die Umlenkrollen umschlingenden Andruckriemen und eine Andruckeinrichtung mit Andruckrollen.

Insbesondere können die Andruckeinrichtung und die Gegendruckeinrichtung einander gegenüberliegend angeordnet sein. Beispielsweise kann dabei die Andruckeinrichtung zwischen den Umlenkrollen angeordnet sein und die Gegendruckeinrichtung zwischen der antriebsseitigen Umlenkrolle und der Antriebsrolle angeordnet sein. Der Antriebsriemen kann dabei um die Antriebsrolle, die Gegendruckeinrichtung und die antriebsseitige Umlenkrolle laufen. Der Andruckriemen kann dabei um die andruckseitigen Umlenkrollen und die Gegendruckeinrichtung laufen.

Insbesondere kann die Antriebsvorrichtung wegen der kraftschlüssigen oder reibschlüssigen Kraftübertragung auf das Antriebselement mit zwei etwa achsensymmetrisch zueinander ausgebildeten Symmetriehälften ausgeführt werden. Beispielsweise können die Antriebsseite und die Andruckseite etwa achsensymmetrisch zueinander ausgebildet sein. Die Symmetrieachse kann, im Wesentlichen quer zur Antriebsrichtung gesehen, beispielsweise etwa in der Mitte des zwischen dem Antriebsriemen und dem Andruckriemen ausgebildeten Spaltes liegen.

Somit sind bei der Fertigung der Teile der Antriebsvorrichtung vermehrt Gleichteile verwendbar. Dadurch lassen sich beispielsweise Zeit- und/oder Kosten bei der Fertigung der Teile der Antriebsvorrichtung einsparen und/oder eine Lagerhaltung der Teile der Antriebsvorrichtung vereinfachen. Weiter ist somit auch eine Anzahl von für die Wartung benötigten Werkzeugen der Antriebsvorrichtung verringerbar.

Insbesondere können die Andruckrollen zum einstellbaren Verkleinern des Spaltes zwischen Andruckriemen und Antriebsriemen verstellbar ausgebildet sein.

Somit ist die Normalkraft zum Herstellen bzw. Sicherstellen der kraft- oder reibschlüssigen Verbindung zwischen Antriebsriemen und Antriebselement einstellbar.

Insbesondere können die Gegendruckrollen der Gegendruckeinrichtung mit einem festen Achsabstand zu der antriebsseitigen Antriebsrolle ausgebildet sein.

Somit ist mit der Gegendruckeinrichtung ein fester Gegenpart zu der Andruckeinrichtung geschaffen, mittels der die von der Andruckeinrichtung über die Andruckrollen aufbringbare Normalkraft aufnehmbar ist. Dies trägt weiter zum Herstellen bzw. Sicherstellen der kraft- oder reibschlüssigen Verbindung zwischen Antriebsriemen und Antriebselement bei.

Beispielsweise können die Andruckrollen der Andruckeinrichtung ohne Nuten ausgebildet sein, d.h., mit einer im Wesentlichen ebenen Oberfläche ausgebildet sein.

Somit kann sich wegen eines geringeren Eindrückens der Andruckrollen in das Antriebselement ein geringerer Fahrwiderstand ergeben.

Insbesondere kann die Andruckeinrichtung und/oder können die Andruckrollen der Andruckeinrichtung gegen eine Federkraft zum einstellbaren Verkleinern des Spaltes zwischen Andruckriemen und Antriebsriemen verstellbar ausgebildet sein.

Somit ist eine Rückstellkraft der Andruckeinrichtung und/oder der Andruckrollen zum Vergrößern des Spaltes zwischen Andruckriemen und Antriebsriemen aufbringbar. Beispielsweise kann die Federkraft mittels eines Tellerfederpakets erzielt werden. Somit ist ein geringer Platzbedarf für die Erzielung der Federkraft realisierbar.

Vorteilhafterweise sind der Antriebsriemen und der Andruckriemen als Mehrrippenriemen ausgebildet. Somit können bei geringer Höhe des Antriebsriemens und des Andruckriemens große Kräfte übertragen werden. Beispielsweise kann der Mehrrippenriemen als sogenannter Poly-V-Riemen, insbesondere mit verschleißfestem Rücken, ausgebildet sein.

Vorteilhafterweise kann die Antriebsvorrichtung auch zwei Antriebsquellen aufweisen. Somit kann ein Ausfall einer Antriebsquelle kompensiert werden.

Dabei kann die zweite Antriebsquelle zusätzlich an der Andruckseite vorgesehen sein, wobei dann an der Andruckseite eine von einem Antriebsriemen umschlungene Antriebsrolle und eine Umlenkrolle vorgesehen sind. Somit kann das Antriebselement symmetrisch von zwei Antriebsriemen angetrieben werden.

Beispielsweise kann die Antriebsquelle ein Elektromotor, insbesondere ein Kegelradgetriebemotor, sein.

Beispielsweise kann eine Wegeverfolgung für den von der beschriebenen Antriebsvorrichtung angetriebenen Förderwagen mittels eines Inkrementalgebers realisiert werden. Insbesondere kann der Inkrementalgeber an der nicht angetriebenen Seite vorgesehen sein, d.h., an der Andruckseite. Somit kann wegen ansonsten möglicher Verfälschung der Messung durch auf der Antriebsseite, insbesondere am Antriebsriemen, auftretenden Antriebsschlupf eine zuverlässige Messung gewährleistet werden.

Der auftretende Antriebsschlupf kann mittels einer Schlupfkontrolle erfasst werden. Die Schlupfkontrolle kann eine Eingangsgröße für einen Regelkreis der Antriebsregelung liefern. Bei erfasstem erhöhten Antriebsschlupf kann eine Störungsmeldung ausgegeben werden und somit eine mögliche Störung frühzeitig erkannt werden. Beispielsweise kann eine Motordrehzahl bzw. eine Abweichung einer Ist-Motordrehzahl von einer Soll-Motordrehzahl mittels eines Drehgebers an einer Getriebeabtriebswelle oder an einer Motorwelle (beispielsweise integriert im Motor) oder mittels eines Näherungsschalters an der Umlenkrolle erfasst werden.

Insbesondere kann der Förderwagen mittels einer Befestigungseinrichtung an dem Antriebselement befestigbar sein. Beispielsweise kann die Befestigungseinrichtung mindestens ein Gelenk aufweisen, das einen oder mehrere Freiheitsgrade zulässt. Somit ist eine horizontale und/oder vertikale Kurvenfahrt des von der beschriebenen Antriebsvorrichtung angetriebenen Förderwagens ausgleichbar und ein zuverlässiger Antrieb des Förderwagens kann gewährleistet werden.

Vorteilhafterweise sind in der Fördereinrichtung in vorbestimmten Abständen zueinander mehrere Antriebsvorrichtungen vorgesehen. Somit kann eine erforderliche Antriebsleistung auf mehrere Antriebsvorrichtungen verteilt und/oder eine gleichmäßigere Belastung des Antriebselements erreicht werden.

Beispielsweise kann der Abstand zwischen zwei Antriebsvorrichtungen etwa 30 bis etwa 100 m oder etwa 50 bis etwa 70 m betragen.

Die Abstände zwischen den Antriebsvorrichtungen können regelmäßig sein.

Alternativ oder zusätzlich können die Abstände zwischen den Antriebsvorrichtungen unregelmäßig sein.

Insbesondere können die Abstände zwischen den Antriebsvorrichtungen in Abhängigkeit einer Zugkraft an dem Antriebselement ausgewählt sein.

Beispielsweise kann die Antriebsvorrichtung an einer Stelle angeordnet sein, an der eine geringe Zugkraft in dem Antriebselement herrscht.

Alternativ oder zusätzlich kann die Antriebsvorrichtung an einer Stelle angeordnet sein, an der die geringste Zugkraft in dem Antriebselement herrscht.

Vorteilhafterweise ist eine Anzahl der Antriebsvorrichtungen in einer Fördereinrichtung derart ausgelegt, dass die Fördereinrichtung auch mit einer Antriebsvorrichtung weniger betreibbar ist. Somit kann bei Ausfall einer der Antriebsvorrichtungen wegen eines Defekts oder einer Reparatur oder einer Wartung die Fördereinrichtung weiter betrieben werden.

Insbesondere kann die Antriebsvorrichtung evtl. zu Reparatur- und/oder Wartungszwecken, beispielsweise mittels Gewindestangen, absenkbar ausgebildet sein. Somit kann die Fördereinrichtung nach dem Absenken weiter betrieben werden, da die Fördereinrichtung wegen der zuvor beschriebenen vorteilhaften Anordnung und/oder Auslegung der Antriebsvorrichtungen auch mit einer Antriebsvorrichtung weniger betrieben werden kann. Somit sind Stillstandszeiten der Fördereinrichtung wegen einer Reparatur und/oder Wartung an einer der Antriebsvorrichtungen verkürzbar.

Bei dem Antriebselement für die Antriebsvorrichtung für einen Förderwagen einer Fördereinrichtung ist eine erste Längsseite des Antriebselements mit quer zur Längsrichtung des Antriebselements ausgerichteten Querrippen und Querfugen zum Ermöglichen einer Kurvenfahrt, insbesondere zum Ausgleich einer Dehnung und/oder Stauchung des Antriebselements, ausgebildet.

Eine der ersten Längsseite gegenüberliegend ausgebildete zweite Längsseite ist im Wesentlichen eben bzw. glattflächig ausgebildet.

Die im Wesentlichen eben ausgebildete zweite Längsseite des beschriebenen Antriebselements bietet Vorteile insbesondere bei einer kraft- oder reibschlüssigen Kraftübertragung durch eine dafür - im Vergleich zu herkömmlichen Antriebselementen für eine formschlüssige Kraftübertragung - vergrößerte Kraftübertragungsfläche.

Vorteilhafterweise ist an dem Antriebselement mindestens eine Aufnahme für die zuvor beschriebene Befestigungseinrichtung für den Förderwagen ausgebildet. Somit ist ein zuverlässiger Antrieb des Förderwagens mittels des beschriebenen Antriebselements und der zuvor beschriebenen Antriebsvorrichtung ermöglicht.

Insbesondere können an dem Antriebselement mehrere in der Längsrichtung des Antriebselements zueinander beabstandete Aufnahmen für die Befestigungseinrichtung zur Befestigung mehrerer Förderwägen ausgebildet sein.

Beispielsweise kann die Aufnahme für die Befestigungseinrichtung als ein Befestigungsloch oder als mehrere Befestigungslöcher in einer der Querrippen des Antriebselements ausgebildet sein. Das oder die Befestigungslöcher können im Wesentlichen quer zur Längsrichtung des Antriebselements verlaufen.

Insbesondere kann das Antriebselement einen etwa rechteckigen Querschnitt aufweisen.

Das Antriebselement kann mit einer innenliegenden Verstärkung ausgebildet sein, die beispielsweise mindestens ein Seil oder ein Gewebe aus Stahl oder Kunststoff enthalten kann. Somit kann eine Zugfestigkeit des Antriebselements erhöht werden.

Vorteilhafterweise ist das Antriebselement als eine Gummiblockkette ausgebildet.

Beispielsweise kann die Gummiblockkette als eine Endloskette ausgebildet sein.

Alternativ kann die Gummiblockkette mit einem Schloss verschließbar ausgebildet sein bzw. können deren freien Enden miteinander verbunden sein, um eine geschlossene Gummiblockkette zu bilden.

Alternativ dazu kann das Antriebselement als eine Metall-Glieder-Kette ausgebildet sein.

Dabei können die aus dem Stand der Technik bekannten Metall-Glieder-Ketten oder neu gestaltete Metall-Glieder-Ketten verwendet werden. Insbesondere kann die Metall-Glieder-Kette zumindest teilweise aus Metall und/oder Kunststoff hergestellte Elemente enthalten.

Die Metall-Glieder-Kette weist eine Vielzahl von einzelnen Metall-Gliedern auf, die derart miteinander verbunden sind, dass ein Verschwenken der Metall-Glieder zueinander in der Horizontalen bzw. einer im Wesentlichen horizontalen Ebene zugelassen wird, um Kurvenfahrten der Förderwagen zuzulassen.

Insbesondere können die Metall-Glieder zusätzlich dazu derart miteinander verbunden sein, dass ein Verschwenken der Metall-Glieder zueinander in der Vertikalen bzw. einer im Wesentlichen vertikalen Ebene zugelassen wird, um Berg- und Talfahrten der Förderwagen zuzulassen.

Dabei müssen die für den vorgeschlagenen Antrieb geeigneten Metall-Glieder-Ketten bzw. die Metall-Glieder einen Antriebsabschnitt aufweisen, der in dem Spalt der als Riementrieb ausgebildeten Antriebskraftübertragungseinrichtung zum Antreiben klemmbar ist oder an den Antriebsriemen anpressbar ist.

Der Antriebsabschnitt kann vorzugsweise als ein sich in eine Richtung, d.h. in der Betriebslage nach unten, erstreckendes Teil bzw. Metallteil ausgebildet sein und insoweit von der Metall-Glieder-Kette abstehen und etwa in der Art eines Bootskiels ausgebildet sein, der in Betriebslage der Metall-Glieder-Kette nach unten in den Spalt des Riemenantriebs ragt.

Bei Verwendung einer Metall-Glieder-Kette ergeben sich die gleichen Vorteile, die im Rahmen der Offenbarung zur Gummiblockkette beschrieben sind. Insbesondere vorteilhaft ist die Verwendung einer Metall-Glieder-Kette in Verbindung mit dem vorgeschlagenen ein- oder beidseitigen Antrieb mittels der offenbarten Antriebskraftübertragungseinrichtung bzw. Antriebsvorrichtung.

Bei dem Förderwagenantrieb für einen Förderwagen einer Fördereinrichtung, mit der zuvor beschriebenen Antriebsvorrichtung und dem zuvor beschriebenen Antriebselement, ist das Antriebselement mittels der Antriebsvorrichtung antreibbar und ist die zweite Längsseite des Antriebselements zum Antrieb des Antriebselements dem Antriebsriemen der Antriebsvorrichtung zugewandt.

Somit ist die zuvor beschriebene vergrößerte Kraftübertragungsfläche für die kraft- oder reibschlüssige Kraftübertragung von dem Antriebsriemen auf das Antriebselement des beschriebenen Antriebselements nutzbar und somit ein zuverlässiger Förderwagenantrieb erzielbar.

Nachfolgend ist ein Ausführungsbeispiel des erfindungsgemäßen Förderwagenantriebs näher erläutert. Es zeigen:
- Fig. 1: eine räumliche Draufsicht eines Förderwagenantriebs gemäß einem Ausführungsbeispiel der Erfindung,
- Fig. 2: eine Draufsicht des Förderwagenantriebs gemäß dem Ausführungsbeispiel von Fig. 1,
- Fig. 3: eine räumliche Draufsicht eines Antriebselements des erfindungsgemäßen Förderwagenantriebs gemäß einem Ausführungsbeispiel der Erfindung und
- Fig. 4: eine Seitenansicht des Antriebselements gemäß dem Ausführungsbeispiel von Fig. 3.

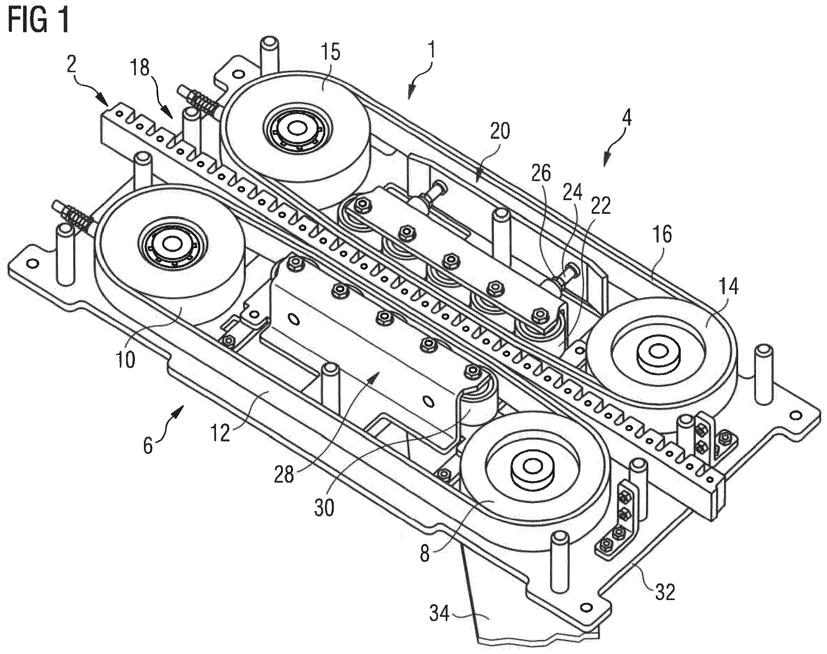

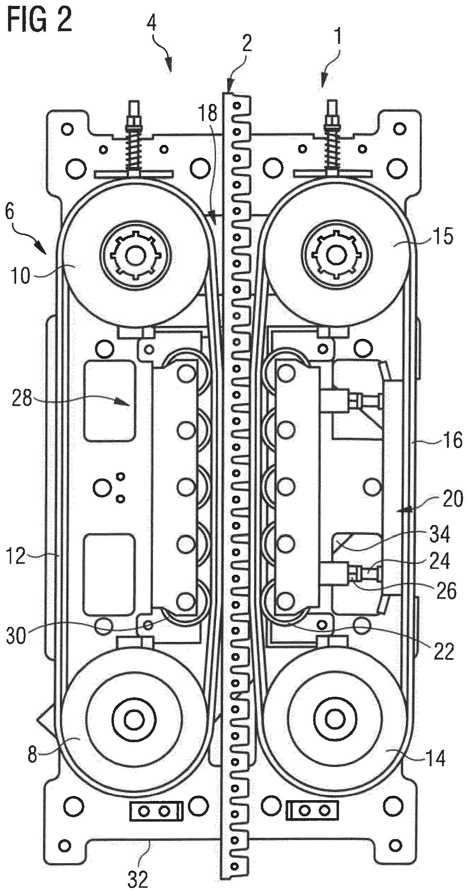

Mit Bezug auf **Fig. 1** und **Fig. 2** wird nachfolgend eine Antriebsvorrichtung 1 und ein Abschnitt eines Antriebselements 2, die in einem Förderwagenantrieb 4 gemäß einem Ausführungsbeispiel der Erfindung enthalten sind, beschrieben.

Die Antriebsvorrichtung 1 weist eine als Riementrieb ausgebildete Antriebskraftübertragungseinrichtung 6 auf, die auf einer Antriebsseite eine Antriebsrolle 8, eine antriebsseitige Umlenkrolle 10 und einen die Antriebsrolle 8 und die Umlenkrolle 10 umschlingenden Antriebsriemen 12 enthalten. Auf einer Andruckseite kann die Antriebskraftübertragungseinrichtung 6 zwei andruckseitige Umlenkrollen 14, 15 und einen die Umlenkrollen 14, 15 umschlingenden Andruckriemen 16 enthalten.

Der Antriebsriemen 12 ist von dem Andruckriemen 16 derart beabstandet ausgebildet, dass zwischen dem Antriebsriemen 12 und dem Andruckriemen 16 ein Spalt 18 ausgebildet ist, in dem das Antriebselement 2 zum Antreiben klemmbar ist.

Das Klemmen des Antriebselements 2 bzw. das Anpressen des Antriebselements 2 an den Antriebsriemen 12 kann mittels einer Andruckeinrichtung 20 mit verstellbaren Andruckrollen 22 erfolgen. Die Verstellung der Andruckrollen 22 kann über Gewindestangen 24 mit Kontermuttern 26 erfolgen. Die mittels der Andruckrollen 22 auf den Andruckriemen 16 aufbringbare Normalkraft kann somit das Antriebselement 2 gegen den Antriebsriemen 12 pressen, wobei die Normalkraft von einer Gegendruckeinrichtung 28 mit Gegendruckrollen 30 aufgenommen werden kann. Die Gegendruckrollen 30 können dafür einen festen Abstand zu dem Antriebselement 2 bzw. einen festen Achsabstand zu der Antriebsrolle 8 aufweisen.

Die Gegendruckrollen 30 und die Antriebsrolle 8 und eine Umlenkrolle 14 der beiden andruckseitigen Umlenkrollen 14, 15 können fest auf einer Grundplatte 32 der Antriebsvorrichtung 1 montiert sein.

Die Andruckrollen 22 und die antriebsseitige Umlenkrolle 10 und die andere Umlenkrolle 15 der andruckseitigen Umlenkrollen 14, 15 können verschiebbar auf der Grundplatte 32 montiert sein. Die Grundplatte 32 kann mit Hilfe von reibungsarmen Kunststoffleisten schwimmend gelagert sein, um eine gleichmäßige Anlage der Andruckrollen 22 mit dem Andruckriemen 16 als Zwischenlage an das Antriebselement 2 zu bewirken, ohne dass die Gefahr besteht, dass sich die Grundplatte 32 in ihrer Lagerung verkanten kann. Somit kann von jeder der Andruckrollen 22 die theoretisch gleiche Andruckkraft in Andruckrichtung auf das Antriebselement ausgeübt werden. Die Andruckrollen 22 können in Andruckrichtung auf das Antriebselement 2 oder entgegen der Andruckrichtung von dem Antriebselement 2 weg verschiebbar sein. Die andruckseitige Umlenkrolle 15 und die antriebsseitige Umlenkrolle 10 können jeweils als Spannrolle fungieren und in Spannrichtung oder entgegen der Spannrichtung des Antriebsriemens 12 bzw. des Andruckriemens 16 verschiebbar sein. Der Antriebsriemen 12 und der Andruckriemen 16 können als Mehrrippenriemen ausgebildet sein, mit dem bei niedriger Bauhöhe vergleichsweise hohe Kräfte übertragbar sind.

Die Antriebsrolle 8 kann, wie in diesem Ausführungsbeispiel, von einer als Elektromotor, insbesondere als Kegelradgetriebemotor, ausgebildeten Antriebsquelle 34 angetrieben sein, die auf einer der Antriebsrolle 8 gegenüberliegenden Seite der Grundplatte 32 angeordnet sein kann.

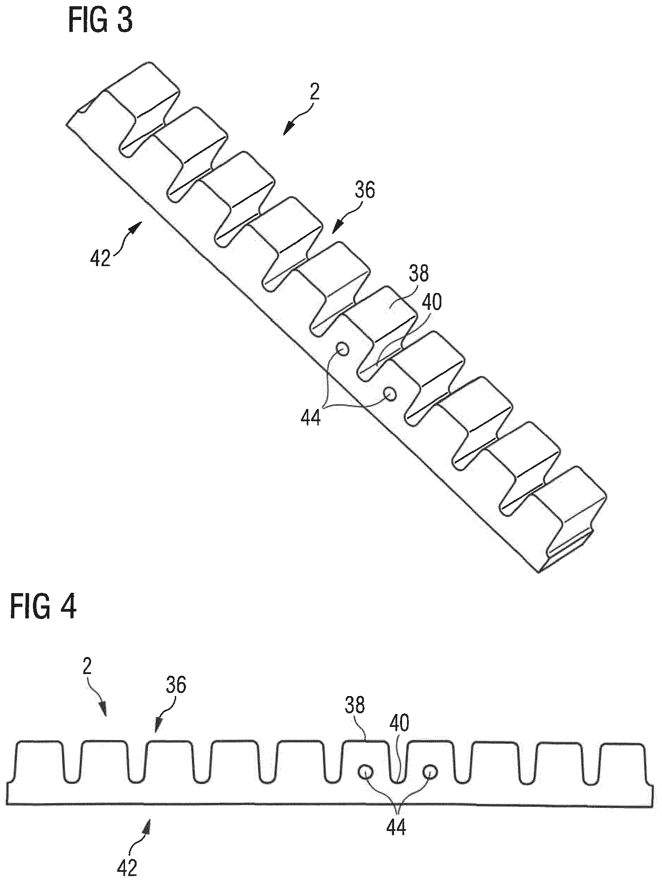

Wie in **Fig. 3** und **Fig. 4** in größerem Detail dargestellt, weist das Antriebselement 2 eine erste Längsseite 36 auf, an der quer zur Längsrichtung des Antriebselements 2 ausgerichtet, also in deren Breitenerstreckung, abwechselnd Querrippen 38 und Querfugen 40 ausgebildet sind. Eine der ersten Längsseite 36 gegenüberliegend ausgebildete zweite Längsseite 42 des Antriebselements 2 ist im Wesentlichen eben ausgebildet.

Wie in diesem Ausführungsbeispiel dargestellt, kann das Antriebselement 2 als eine Gummiblockkette, bestehend aus einzelnen Blöcken, ausgebildet sein. Die Gummiblockkette weist dabei eine glatte Unterseite (zweite Längsseite 42) auf, die zur Antriebsseite hin gerichtet ist, sowie eine gegenüberliegende, das freie Ende der Rippen (Querrippen 38) aufweisende Oberseite (erste Längsseite 36), die zur Andruckseite hin gerichtet ist. Die Flächen der Oberseite und der Unterseite sind zueinander parallel und voneinander beabstandet. Zwischen diesen Flächen befinden sich die Seitenflächen der Gummiblockkette, die ebenfalls zueinander parallel und voneinander beabstandet sind. Es versteht sich, dass die Seitenflächen auch schräg zueinander verlaufen können.

An einer Seitenfläche des Antriebselements 2 kann mindestens eine Aufnahme 44 für eine (nicht dargestellte) Befestigungseinrichtung für einen (nicht dargestellten) Förderwagen ausgebildet sein, die in diesem Ausführungsbeispiel als Befestigungslöcher ausgebildet sind. Die Befestigungslöcher sind vorzugsweise mittig in den jeweiligen Querrippen 38 vorgesehen.

Wie in **Fig. 1** und **Fig. 2** gezeigt, ist die zweite Längsseite 42, d.h. die glatte Unterseite, des Antriebselements 2 zum Antrieb des Antriebselements 2 dem Antriebsriemen 12 der Antriebsvorrichtung 1 zugewandt ausgerichtet.

Mit der zuvor beschriebenen Anordnung bzw. Ausgestaltung des Förderwagenantriebs 4 ist ein kraft- oder reibschlüssiger Antrieb des Antriebselements 2 mittels der Antriebsvorrichtung 1 realisiert.

Dabei kann bei durch die Andruckrollen 22 ausreichend aufgebrachter Normalkraft auf den Antriebsriemen 12 und/oder bei ausreichendem Reibbeiwert für Haftreibung des Antriebsriemens 12 und/oder des Andruckriemens 16 zusammen mit dem Antriebselement 2 die Antriebskraft der Antriebsquelle 34 über die Antriebsrolle 8 und den Antriebsriemen 12 auf das Antriebselement 2 kraft- oder reibschlüssig übertragen werden.

Der mit dem Antriebselement 2 verbundene (nicht dargestellte) Förderwagen kann somit in der (nicht dargestellten) Fördereinrichtung zum Fördern von Fördergütern mit dem verbesserten Förderwagenantrieb 4 zuverlässig angetrieben werden.

### Bezugszeichenliste

- 1: Antriebsvorrichtung
- 2: Antriebselement
- 4: Förderwagenantrieb
- 6: Antriebskraftübertragungseinrichtung
- 8: Antriebsrolle
- 10: antriebsseitige Umlenkrolle
- 12: Antriebsriemen
- 14: andruckseitige Umlenkrolle
- 15: andruckseitige Umlenkrolle
- 16: Andruckriemen
- 18: Spalt
- 20: Andruckeinrichtung
- 22: Andruckrolle
- 24: Gewindestange
- 26: Kontermutter
- 28: Gegendruckeinrichtung
- 30: Gegendruckrolle
- 32: Grundplatte
- 34: Antriebsquelle
- 36: erste Längsseite des Antriebselements
- 38: Querrippe
- 40: Querfuge
- 42: zweite Längsseite des Antriebselements
- 44: Aufnahme

## Patentansprüche

1. Förderwagenantrieb (4) für einen Förderwagen einer Fördereinrichtung mit einer Antriebsvorrichtung (1),
einem Antriebselement (2), wobei das Antriebselement (2) mittels der Antriebsvorrichtung (1) antreibbar ist,
wobei die Antriebsvorrichtung eine Antriebsquelle (34) und eine Antriebskraftübertragungseinrichtung (6) zum Übertragen einer Antriebskraft der Antriebsquelle (34) auf das Antriebselement (2) aufweist,
wobei der Förderwagen zum Antreiben mittels der Antriebsvorrichtung (1) an dem Antriebselement (2) befestigbar ist,
wobei die Antriebskraft von der Antriebskraftübertragungseinrichtung (6) mittels kraftschlüssiger oder reibschlüssiger Verbindung auf das Antriebselement (2) übertragbar ist,
**dadurch gekennzeichnet, dass**
die Antriebskraftübertragungseinrichtung (6) ein Riementrieb ist, der einen zwischen einem Antriebsriemen (12) und einem Andruckriemen (16) ausgebildeten Spalt (18) aufweist, in dem das Antriebselement (2) zum Antreiben klemmbar ist,
wobei eine erste Längsseite (36) des Antriebselements (2) mit quer zur Längsrichtung des Antriebselements (2) ausgerichteten Querrippen (38) und Querfugen (40) zum Ermöglichen von Kurvenfahrten ausgebildet ist und wobei eine der ersten Längsseite (36) gegenüberliegend ausgebildete zweite Längsseite (42) im Wesentlichen eben ausgebildet ist, und
wobei die zweite Längsseite (42) des Antriebselements (2) zum Antrieb des Antriebselements (2) dem Antriebsriemen (12) der Antriebsvorrichtung (1) zugewandt ist.

2. Förderwagenantrieb (4) nach Anspruch 1, wobei die Antriebskraftübertragungseinrichtung (6)
eine Antriebsseite mit
einer Antriebsrolle (8), einer Umlenkrolle (10), dem die Antriebsrolle (8) und die Umlenkrolle (10) umschlingenden Antriebsriemen (12) und einer Gegendruckeinrichtung (28) mit Gegendruckrollen (30) und
eine Andruckseite mit
zwei Umlenkrollen (14, 15), dem die Umlenkrollen (14, 15) umschlingenden Andruckriemen (16) und einer Andruckeinrichtung (20) mit Andruckrollen (22)
aufweist.

3. Förderwagenantrieb (4) nach Anspruch 2, wobei der Antriebsriemen (12) und der Andruckriemen (16) als Mehrrippenriemen ausgebildet sind.

4. Förderwagenantrieb (4) nach einem der vorherigen Ansprüche, wobei in der Fördereinrichtung in vorbestimmten Abständen zueinander mehrere Antriebsvorrichtungen (1) vorgesehen sind.

5. Förderwagenantrieb (4) nach einem der vorherigen Ansprüche, wobei an dem Antriebselement (2) mindestens eine Aufnahme für eine Befestigungseinrichtung für den Förderwagen ausgebildet ist.

6. Förderwagenantrieb (4) nach einem der vorherigen Ansprüche, wobei das Antriebselement (2) als eine Gummiblockkette oder als eine Metall-Glieder-Kette ausgebildet ist.

## Claims

1. A conveying-cart drive (4) for a conveying cart of a conveying device, with
a drive device (1),
a drive element (2), wherein the drive element (2) can be driven by means of the drive device (1),
wherein the drive device (1) comprises a drive source (34) and a drive-force transmission means (6) for transmitting a drive force of the drive source (34) to the drive element (2),
wherein the conveying cart for driving by means of the drive device (1) can be fastened to the drive element (2), and
wherein the drive force can be transmitted from the drive-force transmission means (6) to the drive element (2) by means of a force-locking or frictional-locking connection,
**characterized in**
**that** the drive-force transmission means (6) is a belt drive which has a gap (18) formed between a drive belt (12) and a pressure belt (16), in which gap the drive element (2) can be clamped for driving,
wherein a first long side (36) of the drive element (2) is formed with transverse ribs (38) and transverse joints (40) oriented transversely to the longitudinal direction of the drive element (2) for permitting negotiation of curves and wherein a second long side (42) formed opposite the first long side (36) is formed substantially flat, and
wherein the second long side (42) of the drive element (2) for driving the drive element (2) faces the drive belt (12) of the drive device (1).

2. A conveying-cart drive (4) according to claim 1, wherein the drive-force transmission means (6) comprises
a drive side with a drive roller (8), a deflecting roller (10), the drive belt (12) which wraps around the drive roller (8) and the deflecting roller (10), and a counter-pressure means (28) with counter-pressure rollers (30), and
a pressure side with two deflecting rollers (14, 15), the pressure belt (16) which wraps around the deflecting rollers (14, 15) and a pressure means (20) with pressure rollers (22).

3. A conveying-cart drive (4) according to claim 2, wherein the drive belt (12) and the pressure belt (16) are formed as multi-rib belts.

4. A conveying-cart drive (4) according to one of the preceding claims, wherein multiple drive devices (1) are provided in the conveying device at predetermined distances from each other.

5. A conveying-cart drive (4) according to one of the preceding claims, wherein at least one receptacle for a fastening means for the conveying cart is formed on the drive element (2).

6. A conveying-cart drive (4) according to one of the preceding claims, wherein the drive element (2) is formed as a rubber block chain or as a metal link chain.

## Revendications

1. Entraînement de chariot (4) pour un chariot d'un appareil de transport avec un dispositif d'entraînement (1),
un élément d'entraînement (2), l'élément d'entraînemt (2) pouvant être entraîné au moyen du dispositif d'entraînement (1),
le dispositif d'entraînement présentant une source d'entraînement (34) et un appareil de transmission de la force d'entraînement (6) pour transmettre une force d'entraînement de la source d'entraînement (34) à l'élément d'entraînement (2),
le chariot pouvant être fixé à l'élément d'entraînement (2) pour être entraîné au moyen du dispositif d'entraînement (1),
la force d'entraînement pouvant être transmise par l'appareil de transmission de la force d'entraînement (6) à l'élément d'entraînement (2) au moyen d'une liaison par adhérence ou par friction,
**caractérisé en ce que**
l'appareil de transmission de la force d'entraînement (6) est un entraînement à courroie qui présente une fente (18) réalisée entre une courroie d'entraînement (12) et une courroie de pression (16), dans laquelle l'élément d'entraînement (2) peut être serré pour l'entraînement,
un premier côté longitudinal (36) de l'élément d'entraînement (2) étant réalisé avec des nervures transversales (38) et des joints transversaux (40) orientés transversalement à la direction longitudinale de l'élément d'entraînement (2) pour permettre des trajets en courbe et un deuxième côté longitudinal (42) réalisé à l'opposé du premier côté longitudinal (36) étant réalisé essentiellement plat, et
le deuxième côté longitudinal (42) de l'élément d'entraînement (2) étant tourné vers la courroie d'entraînement (12) du dispositif d'entraînement (1) pour entraîner l'élément d'entraînement (2).

2. Entraînement de chariot (4) selon la revendication 1, dans lequel l'appareil de transmission de la force d'entraînement (6) présente un côté d'entraînement avec une poulie d'entraînement (8), une poulie de renvoi (10), la courroie d'entraînement (12) entourant la poulie d'entraînement (8) et la poulie de renvoi (10) et un appareil de contre-pression (28) avec des poulies de contre-pression (30), et
un côté de pression avec deux poulies de renvoi (14, 15), la courroie de pression (16) entourant les poulies de renvoi (14, 15) et un appareil de pression (20) avec des poulies de pression (22).

3. Entraînement de chariot (4) selon la revendication 2, dans lequel la courroie d'entraînement (12) et la courroie de pression (16) sont réalisées sous forme de courroies à nervures multiples.

4. Entraînement de chariot (4) selon l'une quelconque des revendications précédentes, dans lequel plusieurs dispositifs d'entraînement (1) sont prévus dans l'appareil de transport à des distances prédéterminées les uns des autres.

5. Entraînement de chariot (4) selon l'une quelconque des revendications précédentes, dans lequel au moins un logement pour un appareil de fixation pour le chariot est réalisé sur l'élément d'entraînement (2).

6. Entraînement de chariot (4) selon l'une quelconque des revendications précédentes, dans lequel l'élément d'entraînement (2) est réalisé sous la forme d'une chaîne à blocs de caoutchouc ou sous la forme d'une chaîne à maillons métalliques.
